# EUROPEAN PATENT SPECIFICATION

(11) **EP 3 778 785 B1**
(45) Date of publication and mention of the grant of the patent: **21.02.2024**
(21) Application number: 18912706.1
(22) Date of filing: 28.03.2018
(51) Int. Cl.: C09D 4/00, C09D 5/16, B05D 1/28, B05D 3/02, B05D 5/08, B05D 7/24, C08F 220/32, C08G 81/02, C08L 33/06, C09D 7/63, C09D 133/06, C09D 133/14, C09D 201/06

(54) **RESIN COMPOSITION FOR COATING**
HARZZUSAMMENSETZUNG ZUR BESCHICHTUNG
COMPOSITION DE RÉSINE POUR REVÊTEMENT

(43) Date of publication of application: 17.02.2021
(73) Proprietor: Goo Chemical Co., Ltd., Uji-shi, Kyoto 611-0043 (JP); HIROSAKI UNIVERSITY, Hirosaki-shi, Aomori 036-8560 (JP)
(72) Inventor: MIYAUCHI, Sakina, Kyoto 611-0043 (JP); MARUSAWA, Hisashi, Kyoto 611-0043 (JP); HAMADA, Nobuhito, Kyoto 611-0043 (JP); SAWADA, Hideo, Aomori 036-8560 (JP)
(74) Representative: dompatent von Kreisler Selting Werner - Partnerschaft von Patent- und Rechtsanwälten mbB
(86) International application number: PCT/JP2018/012793
(87) International publication number: WO 2019/186779

(56) References cited:
- EP-A1- 1 422 564
- CN-A- 104 307 051
- CN-A- 105 348 998
- JP-A- H10 251 351
- JP-A- 2001 253 915
- JP-A- 2002 138 254
- JP-A- 2012 031 247
- JP-A- 2012 144 621
- JP-A- 2014 062 273
- JP-A- 2015 137 342
- US-A1- 2014 011 916

## Description

### Technical Field

The present invention relates to coating resin compositions, and specifically relates to a coating resin composition for forming a coating film.

### Background Art

Disclosed in patent literature 1 is an anti-fogging coating agent containing: a polymer of a polymerizable unsaturated monomer having a carboxyl group, as a repeating unit; a crosslinking agent having at least two functional groups which are capable of reacting and covalently bonding with the carboxyl group; a hydroxide of an alkali metal; and a solvent.

According to patent literature 1, the anti-fogging coating agent has an improved anti-fogging property; however, an anti-dirt property is not considered.
Patent Literature 2 discloses a stainproofing powder coating material composition containing a silicate compound (A), an acid anhydride (B1) and/or a thermolatent compound (B2), and a curing resin (C) including a hydrolyzable non-accelerated reactive functional group (e.g., epoxy group) of the silicate compound (A). The curing resin (C) contains a main agent (C1) and a curing agent (C2) and, as a monomer for synthesizing the main agent (C1), an epoxy-group-containing vinyl monomer, an alkyl-group(carbon number 1-50)-containing alkyl(meth)acrylate, and the like are disclosed.

### Citation List

### Patent Literature

Patent Literature 1: JP 2015-137342 A
Patent Literature 2: JP 2002-138254 A

### Summary of Invention

The present invention aims to provide a coating resin composition which can be formed into a coating film having an anti-fogging property and an anti-dirt property.

The coating resin composition according to the present invention is as defined in the appended claims.

### Description of Embodiments

One embodiment of the present invention is described.

A coating resin composition according to the present embodiment is a composition for forming a coating film which can cover various substrates. The coating resin composition contains a cyclic ether group-containing polymer (A) which is a polymer of a polymerizable monomer component (a) containing an ethylene-based unsaturated monomer (a11) having a cyclic ether group and an ethylene-based unsaturated monomer (a12) not having a cyclic ether group, wherein the polymerizable monomer component (a) contains only monomers containing 11 or less carbon atoms; and
a component (B) consisting of at least one compound selected from a group consisting of a polycarboxylic acid (b1) and a polycarboxylic acid anhydride (b2), wherein
in a case where the component (B) contains the polycarboxylic acid (b1), the polycarboxylic acid (b1) contains at least one of 4-methylhexahydrophthalic acid and hexahydrophthalic acid,
in a case where the component (B) contains the polycarboxylic acid anhydride (b2), the polycarboxylic acid anhydride (b2) contains at least one of 4-methylhexahydrophthalic anhydride and hexahydrophthalic anhydride, an amount of the cyclic ether groups in the cyclic ether group-containing polymer (A) is larger than or equal to 0.1 equivalents and less than or equal to 16 equivalents, with respect to 1 equivalent of the carboxyl groups in the component (B),
a cured product of the coating resin composition which is cured by being heated for 0.1 hour or more at a temperature higher than or equal to 100 °C and lower than or equal to a decomposition temperature of the coating resin composition has a water contact angle of 90° or less under a measurement specified by JIS R3257, the monomer (a12) is selected from the group consisting of tert-butyl acrylate and tert-butyl methacrylate, and an amount of the ethylene-based unsaturated monomer (a11) is larger than or equal to 40 parts by mass and less than 100 parts by mass, with respect to 100 parts by mass of the polymerizable monomer component (a).

The coating resin composition cures when the cyclic ether group-containing polymer (A) and the component (B) react in the coating resin composition. Accordingly, the coating resin composition can be formed into the coating film. The coating film can have high strength. Also, the coating film contains a hydroxyl group which is generated by a reaction either between a cyclic ether group and a carboxyl group or between a cyclic ether group and anhydrous carboxyl group. Further, the coating film can contain an unreacted carboxyl group derived from a carboxyl group or an anhydrous carboxyl group in the component (B). It is considered that the component (B) tends to easily move around in the coating resin composition compared to the cyclic ether group-containing polymer (A) and therefore carboxyl groups tend to easily align along a surface of the coating film. It is considered that, due to the above reasons, the coating film can have high hydrophilicity and high oleophobicity, leading to the water contact angle of 90° or less. Accordingly, the coating film can have the high strength, a high anti-fogging property, and a high anti-dirt property. In addition, the coating film can have high adhesiveness to inorganic oxides such as glass. It is considered that the high adhesiveness to inorganic oxides are achieved because a hydroxyl group on a surface of the inorganic oxide tends to easily react and bond with a cyclic ether group of the cyclic ether group-containing polymer (A) in the coating resin composition and a carboxyl group or an anhydrous carboxyl group of the component (B) in the coating resin composition when the coating resin composition is cured on glass.

Each component in the coating resin composition is further explained in detail.

As explained above, the cyclic ether group-containing polymer (A) is the polymer of the polymerizable monomer component (a) containing the ethylene-based unsaturated monomer (a11) having a cyclic ether group. The polymerizable monomer component (a) may contain the ethylene-based unsaturated monomer (a11) and an ethylene-based unsaturated monomer (a12) not having a cyclic ether group.

The cyclic ether group of the cyclic ether group-containing polymer (A) includes at least one of, for example, an epoxy group and an oxetane group. In other words, the cyclic ether group of the ethylene-based unsaturated monomer (a11) includes at least one of, for example, an epoxy group and an oxetane group.

An amount of the ethylene-based unsaturated monomer (a11) is larger than or equal to 40 parts by mass and less than or equal to 100 parts by mass, with respect to 100 parts by mass of the polymerizable monomer component (a). When the amount of the ethylene-based unsaturated monomer (a11) is larger than or equal to 40 parts by mass, the coating film can have the especially high adhesiveness to inorganic oxides such as glass. The amount of the ethylene-based unsaturated monomer (a11) is especially preferably larger than or equal to 40 parts by mass and less than or equal to 80 parts by mass. In this case, the coating film can have good alkali resistance and good acid resistance. The reasons for the high adhesiveness to inorganic oxides, the good alkali resistance, and the good acid resistance are considered as follows. When the amount of the ethylene-based unsaturated monomer (a11) is less than or equal to 80 parts by mass, an amount of hydroxyl groups in the coating film stays sufficiently low. At the same time, when the amount of the ethylene-based unsaturated monomer (a11) is larger than or equal to 40 parts by mass, a crosslinking density in the coating film sufficiently increases. Therefore, the hydrophilicity of the coating film and the crosslinking density in the coating film can be well balanced.

The polymerizable monomer component (a) contains a monomer (a21) containing 11 or less carbon atoms. When the polymerizable monomer component (a) contains only the monomer (a21) containing 11 or less carbon atoms (as is the case in the claimed invention), the coating film with the especially good anti-fogging property can be obtained. The reason for the especially good anti-fogging property is considered as follows. The number of carbon atoms in the monomer has an influence over a distribution, on the surface of the coating film, of hydrophilic functional groups such as: the hydroxyl group generated by the reaction between the cyclic ether group-containing polymer (A) and the component (B); and the carboxyl group derived from the component (B). In other words, it is considered that when the polymerizable monomer component (a) contains only the monomer (a21) containing 11 or less carbon atoms, the hydrophilic functional groups are well-distributed on the surface of the coating film and thereby the surface of the coating film gains the good hydrophilicity.

According to the present technology in general but not the invention as claimed, the polymerizable monomer component (a) may contain a monomer (a22) containing 12 or more carbon atoms at an amount larger than or equal to 0.5 weight% and less than or equal to 60 weight%. In other words, the polymerizable monomer component (a) may contain the monomer (a21) containing 11 or less carbon atoms and the monomer (a22) containing 12 or more carbon atoms, an amount of the monomer (a21) with respect to a total amount of the polymerizable monomer component (a) may be larger than or equal to 40 weight% and less than or equal to 99.5 weight%, and an amount of the monomer (a22) with respect to a total amount of the polymerizable monomer component (a) may be larger than or equal to 0.5 weight% and less than or equal to 60 weight%. In this case, the coating film with the especially good anti-dirt property can be obtained. The reasons for the especially good anti-dirt property are considered as follows. When the amount of the monomer (a22) is larger than or equal to 0.5 weight%, there exists space in the coating film for molecular chains having the hydrophilic functional groups to moderately move around, leading to small interaction between the surface of the coating film and oil droplets, and thereby the surface of the coating film gains the high oleophobicity. In addition, when the amount of the monomer (a22) is less than or equal to 60 weight%, the molecular chains having the hydrophilic functional groups tend not to be exceedingly dense on the surface of the coating film, and motions of the molecular chains tend not to be prevented.

Furthermore, according to the present technology in general but not the invention as claimed, the monomer (a22) preferably contains a monomer (a221) containing 12 or more and 22 or less carbon atoms, and an amount of the monomer (a221) is preferably larger than or equal to 0.5 weight% and less than or equal to 30 weight% with respect to the total amount of the polymerizable monomer component (a). Moreover, the monomer (a22) preferably does not contain a monomer containing more than 22 carbon atoms. In this case, the coating film can have the especially high anti-dirt property. It is considered that the especially high anti-dirt property is achieved since the amount of the monomer containing more than 22 carbon atoms is low and thereby the molecular chains on the surface of the coating film are prevented from becoming oleophilic.

According to the present technology in general but not the invention as claimed, the monomer (a22) preferably contains a (meth)acrylate having at least one group selected from a group consisting of an alkyl group of 8 to 18 carbon atoms and a straight chain alkoxy group of 8 to 18 carbon atoms. In this case, the coating film can have the especially high anti-dirt property. The reason for the especially high anti-dirt property is considered as follows. The alkyl groups or the straight chain alkoxy groups derived from the (meth) acrylate appropriately adjust a density of the hydrophilic functional groups such as carboxyl groups on the surface of the coating film, leading to a decrease in an interaction between the hydrophilic groups and dirt, and thereby the dirt tends not to attach to the coating film. Furthermore, when the number of carbon atoms is 12 or less, the coating film can maintain good hardness. The reason for the good hardness is considered as follows. As the number of carbon atoms in the alkyl groups or the straight chain alkoxy groups derived from the (meth)acrylate becomes more than 12, the molecular chains become oleophilic and exposed to the surface of the coating film, and thereby the surface of the coating film exhibits plasticity. An amount of the (meth)acrylate is preferably larger than or equal to 0.5 weight% and less than or equal to 30 weight% with respect to the amount of the polymerizable monomer component (a).

Note that the monomers contained in the polymerizable monomer component (a) are defined as the above mentioned ethylene-based unsaturated monomer (a11) having a cyclic ether group or the above mentioned ethylene-based unsaturated monomer (a12) not having a cyclic ether group, based on whether or not a cyclic ether group is contained, regardless of the number of carbon atoms. Also, the monomers contained in the polymerizable monomer component (a) are defined as the monomer (a21) containing 11 or less carbon atoms (according to the claimed invention), the monomer (a22) containing 12 or more carbon atoms (not according to the claimed invention), or the monomer (a221) (not according to the claimed invention) containing 12 or more and 22 or less carbon atoms, based on the number of carbon atoms, regardless of whether or not a cyclic ether group is contained. Therefore, there may exist a monomer, for example, which is defined as the ethylene-based unsaturated monomer (a11) as well as the monomer (a21) containing 11 or less carbon atoms.

The cyclic ether group-containing polymer (A) preferably does not have an aromatic ring. In other words, the polymerizable monomer component (a) preferably does not have an aromatic ring. In this case, the coating film can have high transparency. Further, yellowing of the coating film when irradiated with light can be prevented. In other words, the coating film can have high light resistance and high yellowing resistance.

Examples of the monomer which is defined as the monomer (a11) as well as the monomer (a21), i.e., the monomer which has a cyclic ether group and contains 11 or less carbon atoms, include glycidyl methacrylate (the number of carbon atoms is 7), 3,4-epoxy cyclohexyl methyl acrylate (the number of carbon atoms is 10), 3-ethyl-3-methacryloxy methyl oxetane (the number of carbon atoms is 10), 4-hydroxybutyl acrylate glycidyl ether, and 3,4-epoxy cyclohexyl methyl methacrylate (the number of carbon atoms is 11).

Examples of a monomer which is defined as the monomer (a12) as well as the monomer (a21), i.e., a monomer which does not have a cyclic ether group and contains 11 or less carbon atoms, include methyl methacrylate (the number of carbon atoms is 5), tert-butyl acrylate (the number of carbon atoms is 7), tert-butyl methacrylate (the number of carbon atoms is 8), and benzyl methacrylate (the number of carbon atoms is 11). According to the invention as claimed, the monomer (a12) is selected from the group consisting of tert-butyl acrylate and tert-butyl methacrylate.

Examples of a monomer which is defined as the monomer (a12) as well as the monomer (a22), i.e., a monomer which does not have a cyclic ether group and contains 12 or more carbon atoms, include isononyl acrylate (the number of carbon atoms is 12), 2-ethylhexyl methacrylate (the number of carbon atoms is 12), isononyl methacrylate (the number of carbon atoms is 13), isodecyl acrylate (the number of carbon atoms is 13), isodecyl methacrylate (the number of carbon atoms is 14), n-lauryl acrylate (the number of atoms is 15), n-lauryl methacrylate (the number of carbon atoms is 16), isostearyl acrylate (the number of carbon atoms is 21), n-stearyl acrylate (the number of carbon atoms is 21), isostearyl methacrylate (the number of carbon atoms is 22), and n-stearyl methacrylate (the number of carbon atoms is 22). Such monomers are not in accordance with the invention as claimed.

Synthesis of the cyclic ether group-containing polymer (A) is explained. The cyclic ether group-containing polymer (A) can be synthesized by polymerizing the polymerizable monomer component (a). A known polymerization method can be employed. For example, when synthesizing the cyclic ether group-containing polymer (A) by a solution polymerization method, the polymerizable monomer component (a) can be polymerized by heating a reaction solution containing the polymerizable monomer component (a), a polymerization initiator, and a solvent under an inert atmosphere, and thereby the cyclic ether group-containing polymer (A) can be synthesized.

Examples of the solvent used in the solution polymerization method include: water; straight or branched alcohols, dialcohols, and polyalcohols such as methanol, ethanol, propyl alcohol, isopropyl alcohol, butanol, hexanol, and ethylene glycol; ketones such as acetone, methylethyl ketone, cyclohexane; aromatic hydrocarbons such as toluene and xylene; petroleum aromatic mixed solvents such as Swazol series (manufactured by Maruzen Petrochemical Co., Ltd) and SOLVESSO series (manufactured by Exxon Chemical Corporation); cellosolves such as cellosolve and butyl cellosolve; carbitols such as carbitol, butyl carbitol, diethyleneglycol monomethylether acetate; propyleneglycol alkylethers such as propyleneglycol methylether; polypropylene glycol alkylethers such as dipropyleneglycol methylether; acetic esters such as ethyl acetate, butyl acetate, and cellosolve acetate; dioxane; dimethyl formamide; and dialkylglycol ethers. The above listed compounds may be used alone or in combination as the solvent.

Examples of the polymerization initiator include: peroxides such as ammonium peroxodisulfate, benzoyl peroxide, and lauroyl peroxide; and azo compounds such as 2,2'-azobisisobutyronitrile, 2,2'-azobis-2-methyl butyronitrile, 2,2'-azobis-2,4-dimethyl valeronitrile, 1,1'-azobis-1-cyclohexane carbonitrile, 4,4'-azobis-4-cyano valeric acid, and 2,2'-azobis-(2-amidinopropane)-dihydrochloride.

If necessary, a chain transfer agent may be added to the reaction solution for a purpose such as adjusting a molecular weight of the cyclic ether group-containing polymer (A). Examples of the chain transfer agent include: compounds having a mercaptan group such as lauryl mercaptan, dodecyl mercaptan, and thioglycerol; α methyl styrene dimers such as 2,4-diphenyl-4-methyl-1-pentene; and inorganic salts such as sodium hypophosphite and sodium hydrogen sulfite. An amount of the chain transfer agent is appropriately determined so that a weight average molecular weight of the cyclic ether group-containing polymer (A) lies within a certain range.

The weight average molecular weight of the cyclic ether group-containing polymer (A) is preferably smaller than or equal to 100000. The weight average molecular weight of the cyclic ether group-containing polymer (A) is more preferably larger than or equal to 1000 and smaller than or equal to 13000. In this case, the coating film can have the especially good properties and the especially high adhesiveness to substrates made of the inorganic oxides such as glass. Note that the weight average molecular weight is a value in polystyrene conversion measured by gel permeation chromatography.

An equivalent of the cyclic ether groups in the cyclic ether group-containing polymer (A) is preferably larger than or equal to 140 and less than or equal to 400. In this case, the cyclic ether group-containing polymer (A) can have good reactivity, and the coating film can have the good hardness and the good hydrophilicity. Specifically, when the equivalent of the cyclic ether groups is less than or equal to 400, the coating film can have the high crosslinking density. Due to this, the coating film can have the especially good adhesiveness, the especially good hardness, the especially good water resistance, and the especially good chemical resistance. Also, when the equivalent of the cyclic ether groups is larger than or equal to 140, the amount of the hydroxyl groups in the coating film is prevented from increasing excessively. Due to this, the coating film can have the especially good water resistance and the especially good chemical resistance.

The component (B) is explained. As mentioned above, the component (B) consists of at least one compound selected from a group consisting of the polycarboxylic acid (b 1) and the polycarboxylic acid anhydride (b2).

The component (B) is preferably liquid at 25 °C. In this case, the coating film can have high homogeneity and the especially high hydrophilicity. It is considered that the high homogeneity and the especially high hydrophilicity are achieved since the component (B) is well distributed in the composition when the component (B) is liquid, leading to well distribution, in the coating film, of the hydroxyl groups generated by the reaction between the cyclic ether group-containing polymer (A) and the component (B).

The component (B) preferably does not contain an aromatic group. In this case, the coating film can have the high transparency. Further, yellowing of the coating film when irradiated with light can be prevented. In other words, the coating film can have high weatherability and the high yellowing resistance.

In a case where the component (B) contains the polycarboxylic acid (b 1), the polycarboxylic acid (b1) contains at least one of 4-methylhexahydrophthalic acid and hexahydrophthalic acid. In a case where the component (B) contains the polycarboxylic acid anhydride (b2), the polycarboxylic acid anhydride (b2) contains at least one of 4-methylhexahydrophthalic anhydride and hexahydrophthalic anhydride. In these cases, the coating film can have the especially high homogeneity and the especially high hydrophilicity.

An amount of the cyclic ether groups in the cyclic ether group-containing polymer (A) is larger than or equal to 0.1 equivalents and less than or equal to 16 equivalents, with respect to 1 equivalent of the carboxyl groups in the component (B). In this case, the coating film can have the especially high hydrophilicity. It is considered that the especially high hydrophilicity is achieved since the unreacted carboxyl groups in the component (B) are well distributed on the surface of the coating film. Also, when the amount of the cyclic ether groups is larger than or equal to 0.1 equivalents, the unreacted carboxyl groups are prevented from excessively exist on the surface of the coating film, and therefore the adhesiveness and the water resistance of the coating film can be maintained. Further, it is prevented that a part of the component (B) remained on the surface of the coating film unreacted, leading to prevention of ununiformity of the coating film caused by volatilization of the part of the component (B) when heated. Also, when the amount of the cyclic ether groups is less than or equal to 16 equivalents, the high crosslinking density of the coating film can be maintained, and thus the good hardness, the good adhesiveness, and the good chemical resistance of the coating film are maintained. The amount of the cyclic ether groups is more preferably larger than or equal to 0.3 equivalents. The amount of the cyclic ether groups is more preferably less than or equal to 5 equivalents.

The coating resin composition may contain a curing catalyst (also referred to as a curing accelerator). The curing catalyst is a compound which accelerates a reaction between a compound containing a cyclic ether group and a compound containing a carboxyl group. A known curing catalyst may be used. Examples of the curing catalyst include imidazole compounds, organophosphorus compound, tertiary amines, and quaternary ammonium salts. However, the coating resin composition preferably does not contain the curing catalyst. The reaction between the cyclic ether group-containing polymer (A) and the component (B) in the coating resin composition can proceed well even if the coating resin composition does not contain the curing catalyst. Further, in a case where the coating resin composition does not contain the curing catalyst, uses of the coating film are not limited due to curing catalyst, and the coating film can be used in, for example, food hygiene.

The coating resin composition may contain at least one of a fluoroalkyl group-containing compound (C1) (hereinafter, also referred to as a compound (C1)) represented by a following formula (1) and a fluoroalkyl group-containing compound (C2) (hereinafter, also referred to as a compound (C2)) represented by a following formula (2). The compound (C1) and the compound (C2) can further improve the hydrophilicity and the oleophobicity of the coating film.

In the formula (1), R_{F} each represents CₐF₂ₐ₊₁O_{b}, a represents a number larger than or equal to 1 and smaller than or equal to 15, b represents a number larger than or equal to 0 and smaller than or equal to 10, R represents an organic group, and n represents a natural number. In the formula (2), R_{F} represents CₐF₂ₐ₊₁, a represents a number larger than or equal to 1 and smaller than or equal to 15. In the formula (2), x and y represent natural numbers such that x : y is within a range of 1 : 99 to 60 : 40.

R_{F}-(CH₂CH(C(=O)R))ₙ-R_{F} . (1)

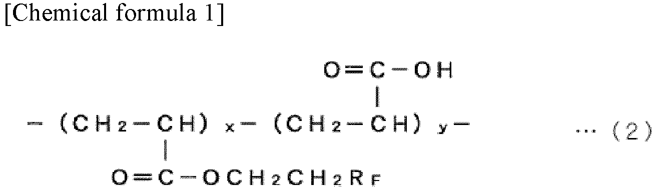

The fluoroalkyl group-containing compound (C1) is further explained.

The organic group R in the formula (1) is:, for example, a hydroxyl group; a straight or branched alkyl ether group such as a methyl ether group, an ethyl ether group, a propyl ether group, and an isopropyl ether group; a secondary amino group such as a morpholino group, a (1,1-dimethyl-3-oxo isobutyl) amino group, and a dimethyl amino group; or a tertiary amino group.

In the formula (1), n represents, for example, a number larger than or equal to 1 and smaller than or equal to 450.

The compound (C1) is preferably an oligomer, and especially, a number average molecular weight of the compound (C1) is preferably larger than or equal to 500 and smaller than or equal to 30000. The number average molecular weight is more preferably larger than or equal to 1000 and smaller than or equal to 15000, and further preferably larger than or equal to 2000 and smaller than or equal to 8000. The number average molecular weight is measured by gel permeation chromatography.

The compound (C1) contains at least one kind of compound selected from a group consisting of, for example, a fluoroalkyl group-containing dimethyl acrylamide oligomer which has a dimethyl acrylamide residue as (CH₂CH(C(=O)R)), a fluoroalkyl group-containing N-(1,1-dimethyl-3-oxobutyl) acrylamide oligomer which has a N-(1,1-dimethyl-3-oxobutyl) acrylamide residue as (CH₂CH(C(=O)R)), and a fluoroalkyl group-containing acryloyl morpholine oligomer which has an acryloyl morpholine residue as (CH₂CH(C(=O)R)).

The compound (C2) is explained.

The formula (2) is a nominal composition representing structures of structural units composing the compound (C2) and a ratio of each structural unit in the compound (C2). In other words, the compound (C2) is a copolymer containing the structural unit represented on the left side of the formula (2) (i.e., an acrylate monomer residue having a fluoroalkyl group) and the structural unit represented on the right side of the formula (2) (i.e., an acrylic acid residue) at a molar ratio of x : y. The compound (C2) also can be defined as a copolymer obtained by copolymerizing the acrylate monomer having a fluoroalkyl group and the acrylic acid at the molar ratio of x : y.

The acrylate monomer having a fluoroalkyl group has a structure, for example, of CH₂CHCOOCH₂CH₂R_{F}. The acrylate monomer having a fluoroalkyl group contains, for example, fluoroalkyl ethyl acrylate. The acrylate monomer having a fluoroalkyl group especially preferably contains at least one kind of compound selected from a group consisting of 2-(perfluoro butyl)ethyl acrylate, 2-(perfluoro hexyl)ethyl acrylate, and 2-(perfluoro octyl)ethyl acrylate.

In the formula (2), a in R_{F} is especially preferably larger than or equal to 4 and smaller than or equal to 8. Also, in the formula (2), x : y is especially preferably within a range of 3 : 97 to 40 : 60.

A number average molecular weight of the compound (C2) is preferably larger than or equal to 500 and smaller than or equal to 10000, and more preferably larger than or equal to 1500 and smaller than or equal to 5000. The number average molecular weight is measured by gel permeation chromatography.

The compound (C2) can be synthesized by, for example, copolymerizing an acrylic acid and an acrylate monomer having a fluoroalkyl group by an appropriate polymerization method. Examples of the polymerization method include a known polymerization method such as a conventional solution polymerization method in which a solvent is used.

The compound (C1) and the compound (C2) are considered to especially improve the hydrophilicity and the oleophobicity of the coating film, due to fluoroalkyl chains existing in the molecules.

The coating resin composition especially preferably contains the compound (C1). The compound (C1) especially contributes to the improvements in the hydrophilicity and the oleophobicity of the coating film and improves the anti-fogging property of the coating film. It is considered that the improvements in the hydrophilicity, the oleophobicity, and the anti-fogging property are achieved since the compound (C1) has a polar group within its molecular skeleton and a perfluoro alkyl group or a perfluoro oxaalkyl group on its end.

When the coating resin composition contains at least one of the compound (C1) and the compound (C2), a total amount of the compound (C1) and the compound (C2) in the coating resin composition is preferably larger than or equal to 1 weight% and less than or equal to 50 weight%, with respect to a total amount of the cyclic ether group-containing polymer (A) and the component (B). When the total amount of the compound (C1) and the compound (C2) is larger than or equal to 1 weight%, the coating film can have the especially good anti-fogging property and the especially good anti-dirt property. When the total amount of the compound (C1) and the compound (C2) is less than or equal to 50 weight%, the coating resin composition can be well cured. The total amount of the compound (C1) and the compound (C2) is more preferably larger than or equal to 5 weight% and more preferably less than or equal to 10 weight%.

The coating resin composition may contain a solvent, if necessary. Examples of the solvent are same as the above mentioned examples of the solvent used in the synthesis of the cyclic ether group-containing polymer (A) by the solution polymerization method.

The coating resin composition can be applied on the substrate and then heated so that the cyclic ether group-containing polymer (A) and the component (B) react, and thereby the coating resin composition can be cured. Accordingly, the coating film can be formed from the coating resin composition. As explained above, the coating film can have the high hydrophilicity and the high oleophobicity. Due to this, the coating film can provide the surface of the substrate with the good anti-fogging property and the good anti-dirt property. Materials and shapes of the substrate are not limited. As mentioned above, when the substrate is made of the inorganic oxides such as glass, the coating film can have the especially high adhesiveness to the substrate.

A thickness of the coating film is preferably larger than or equal to 1 µm. When the thickness is larger than or equal to 1 µm, the coating film can have the good adhesiveness to the substrate such as glass. It is considered that the good adhesiveness is achieved since the coating film can have moderate durability when the thickness being larger than or equal to 1 µm.

As mentioned above, the coating film has the high hydrophilicity and has the water contact angle of 90° or less. As explained above, the water contact angle is determined by measuring the water contact angle of a cured product which is obtained by curing the coating resin composition, employing a method specified by JIS R3257. In order for the coating film to have the high hydrophilicity, the water contact angle of the coating film or the cured product is 90° or less. The water contact angle is preferably 40° or more. In this case, the coating film can have the excellent anti-fogging property. It is considered that the excellent anti-fogging property is achieved since the hydrophilicity and the oleophobicity of the cured product or the coating film are well balanced. The water contact angle is more preferably 60° or more.

Also, the coating film can have the high oleophobicity as explained above, and accordingly the coating film can have dodecane contact angle of 10° or more. The dodecane contact angle is determined by measuring the dodecane contact angle of a cured product which is obtained by curing the coating resin composition, employing a method specified by JIS R3257. In order for the coating film to have the high oleophobicity, the dodecane contact angle of the coating film or the cured product is preferably 15° or more. In this case, the coating film or the cured product can have the good oleophobicity, leading to the especially excellent anti-dirt property of the coating film or the cured product. The dodecane contact angle is more preferably 20° or more.

The coating film can have the high hardness in addition to the high hydrophilicity and the high oleophobicity, since the cyclic ether group-containing polymer (A) and the component (B) react sufficiently. Due to this, pencil hardness of the coating film can be B or harder.

Also, as explained above, the coating film has the high adhesiveness to glass. For example, when a peeling test using cellophane adhesion tape as specified in JIS K5600 5-6 is carried out on the coating film formed on the flat glass substrate, edges of cut lines are smooth, there is no observation of peeling of the coating film at the intersections of the cut lines, and none of the 10 × 10 square sections surrounded by the cut lines is peeled.

These properties of the coating film can be achieved by adjusting a composition of the coating resin composition within the above mentioned range.

The coating film having the anti-fogging property and the anti-dirt property can be obtained from the coating resin composition. As explained above, the anti-fogging property and the anti-dirt property are achieved since the coating film has the high hydrophilicity and the high oleophobicity.

### Examples

### 1. Preparation of polymer

### 1-1. Synthesis

A reaction solution was prepared by adding components listed in the following Tables 1 to 3 into a four-neck flask equipped with a reflux condenser, a thermometer, a glass tube for nitrogen-substitution, and a stirrer. The reaction mixture was heated at 95 °C for 6.5 hours under a nitrogen gas stream for polymerization reaction to proceed, resulting in a solution containing the polymer.

### 1-2. Measurement of weight average molecular weight

A weight average molecular weight of the polymer was measured by gel permeation chromatography.

Before the measurement, tetrahydrofuran was added to the solution containing the polymer at a solid-based concentration of 0.1 weight% and thereby a sample solution was prepared. 20 µl of the sample solution was added to the GPC measurement device. The conditions of the gel permeation chromatography are as follows.
*GPC measurement device: SHODEX GPC SYSTEM 11 manufactured by SHOWA DENKO K.K.
* Column: GPC KF-800P, GPC KF-805, GPC KF-803, GPC KF-801 (manufactured by SHOWA DENKO K.K.) connected in series
Mobile phase: THF
Flow rate: 1 mL/min
Column temperature: 40 °C
Detector: differential refractive index detector
Conversion: polystyrene

### Measurement of solid content

0.7 g of the solution containing the polymer held in an aluminum dish was heated on a hot plate with a temperature of 150 °C while stirring and temporary dried. After that, the solution was heated for 1 hour in a drying device at 150 °C and then cooled to room temperature in a desiccator. Accordingly, the solvent in the solution was vaporized and the solid was obtained. The weight of the solid was measure and the solid content (in weight%) was calculated based on the result thereof.

### 1-4. Calculation of equivalent of cyclic ether group

The equivalent of cyclic ether groups in the polymer was calculated based on the composition of the ingredients.

**[Table 1]**

| | | Synthetic examples | | | | | | |
|---|---|---|---|---|---|---|---|---|
| | | 1 | 2 | 3 | 4 | 5* | 6 | 7 |
| Material composition (parts by mass) | glycidyl methacrylate | 120 | 137 | 133 | 146 | 200 | 160 | 80 |
| | 3,4-epoxy cyclohexyl methyl acrylate | - | - | - | - | - | - | - |
| | 3-ethyl-3-methacryloxy methyl oxetane | - | - | - | - | - | - | - |
| | 3,4-epoxy cyclohexyl methyl methacrylate | - | - | - | - | - | - | - |
| | methyl methacrylate | 25 | | 28 | 30 | - | 13 | 38 |
| | tert-butyl acrylate | 20 | 23 | - | 24 | - | 10 | 30 |
| | tert-butyl methacrylate | 35 | 40 | 39 | - | - | 17 | 52 |
| | benzyl- methacrylate | - | - | - | - | - | - | - |
| | 2-ethylhexyl methacrylate | - | - | - | - | - | - | - |
| | n-lauryl methacrylate | - | - | - | - | - | - | - |
| | n-stearyl methacrylate | - | - | - | - | - | - | - |
| | 2,2'-azobis isobutyronitrile | 24 | 24 | 24 | 24 | 24 | 24 | 24 |
| | diethylene glycol monoethyl ether acetate | 200 | 200 | 200 | 200 | 200 | 200 | 200 |
| Properties | Weight average molecular weight | 3840 | 3390 | 4330 | 4100 | 4870 | 4480 | 4310 |
| | Solid content (weight%) | 52 | 52 | 52 | 52 | 52 | 52 | 52 |
| | Cyclic ether group equivalent | 236.9 | 207.7 | 213.9 | 194.7 | 142.2 | 177.7 | 355.8 |

| | | | | | | | | |
|---|---|---|---|---|---|---|---|---|
| * not according to the invention as claimed | | | | | | | | |

**[Table 2]**

| | | Synthetic examples | | | | | | |
|---|---|---|---|---|---|---|---|---|
| | | 8* | 9* | 10 | 11* | 12 | 13 | 14 |
| Material composition (parts by mass) | glycidyl methacrylate | 40 | - | 120 | 140 | 120 | - | - |
| | 3,4-epoxy cyclohexyl methyl acrylate | - | - | - | - | - | 131.5 | - |
| | 3-ethyl-3-methacryloxy methyl oxetane | - | - | - | - | - | - | 132.0 |
| | 3,4-epoxy cyclohexyl methyl methacrylate | - | - | - | - | - | - | - |
| | methyl methacrylate | 50 | 63 | 25 | 25 | 25 | 21.5 | 21.5 |
| | tert-butyl acrylate | 40 | 50 | 20 | 20 | 20 | 17 | 17 |
| | tert-butyl methacrylate | 70 | 87 | 35 | 10 | 35 | 30 | 29.5 |
| | benzyl- methacrylate | - | - | - | - | - | - | - |
| | 2-ethylhexyl methacrylate | - | - | - | 5 | - | - | - |
| | n-lauryl methacrylate | - | | - | - | - | - | - |
| | n-stearyl methacrylate | - | - | - | - | - | - | - |
| | 2,2'-azobis isobutyronitrile | 24 | 24 | 14.2 | 24 | 12 | 24 | 24 |
| | diethylene glycol monoethyl ether acetate | 200 | 200 | 200 | 200 | 200 | 200 | 200 |
| Properties | Weight average molecular weight | 4230 | 4230 | 7500 | 3820 | 14960 | 4100 | 3820 |
| | Solid content (weight%) | 52 | 52 | 52 | 52 | 52 | 52 | 52 |
| | Cyclic ether group equivalent | 711.7 | - | 236.9 | 203.2 | 236.9 | 277.3 | 278.9 |

| | | | | | | | | |
|---|---|---|---|---|---|---|---|---|
| * not according to the invention as claimed | | | | | | | | |

**[Table 3]**

| | | Synthetic examples | | | | | | |
|---|---|---|---|---|---|---|---|---|
| | | 15 | 16 * | 17* | 18* | 19* | 20 * | 21* |
| Material composition (parts by mass) | glycidyl methacrylate | - | 102 | 123 | 118 | 117 | 80 | 40 |
| | 3,4-epoxy cyclohexyl methyl acrylate | - | - | - | - | - | - | - |
| | 3-ethyl-3-methacryloxy methyl oxetane | - | - | - | - | - | - | - |
| | 3,4-epoxy cyclohexyl methyl methacrylate | 135 | - | - | - | - | - | - |
| | methyl methacrylate | 20.5 | - | - | - | 10 | - | - |
| | tert-butyl acrylate | 16 | - | - | - | - | - | - |
| | tert-butyl methacrylate | 28.5 | | 27 | 33 | 23 | - | - |
| | benzyl-methacrylate | - | 98 | - | - | - | - | - |
| | 2-ethylhexyl methacrylate | - | - | 50 | - | - | 120 | 160 |
| | n-lauryl methacrylate | - | - | - | 49 | - | - | - |
| | n-stearyl methacrylate | - | - | - | - | 50 | | - |
| | 2,2'-azobis isobutyronitrile | 24 | 24 | 24 | 24 | 24 | 24 | 24 |
| | diethylene glycol monoethyl ether acetate | 200 | 200 | 200 | 200 | 200 | 200 | 200 |
| Properties | Weight average molecular weight | 4000 | 4240 | 4450 | 4660 | 4660 | 4230 | 3940 |
| | Solid content (weight%) | 52 | 52 | 52 | 52 | 52 | 52 | 52 |
| | Cyclic ether group equivalent | 290.6 | 278.6 | 231.2 | 240.9 | 243.0 | 355.8 | 711.7 |

| | | | | | | | | |
|---|---|---|---|---|---|---|---|---|
| * not according to the invention as claimed | | | | | | | | |

### 2. Preparation of composition and evaluation

The synthesized polymer was used to prepare a composition. Specifically components listed in the following Tables 4 to 9 are mixed to prepare the composition. Note that amounts of tetrahydrofuran in the Tables are in volume with respect to 1 g of the cyclic ether group-containing polymer (A) and the component (B) in total.

In the Tables, "4-methylhexahydrophthalic anhydride/ hexahydrophthalic anhydride (70/30)" is RIKACID MH-70 manufactured by New Japan Chemical co., ltd.

Also, details of fluoro compounds 1 to 3 in the Tables are as follows.
*Fluoro compound 1: fluoroalkyl group-containing dimethyl acrylamide oligomer having a number average molecular weight of 1700 and having a structure represented by the formula (1) where (CH₂CH(C(=O)R)) in the formula (1) is a residue of dimethyl acrylamide and R_{F} in the formula (1) is CF(CF₃)OC₃F₇.
*Fluoro compound 2: fluoroalkyl group-containing N-(1,1-dimethyl-3-oxobutyl)acrylamide oligomer having a number average molecular weight of 10100 and having a structure represented by the formula (1) where (CH₂CH(C(=O)R)) in the formula (1) is a residue of N-(1,1-dimethyl-3-oxobutyl)acrylamide and R_{F} in the formula (1) is CF(CF₃)OC₃F₇.
*Fluoro compound 3: fluoroalkyl group-containing acryloyl morpholine oligomer having a number average molecular weight of 8300 and having a structure represented by the formula (1) where (CH₂CH(C(=O)R)) in the formula (1) is a residue of acryloyl morpholine and R_{F} in the formula (1) is CF(CF₃)OC₃F₇.

The composition was applied on a glass substrate using a bar coater (No. 16) and heated at 150 °C for 30 minutes and thereby a coating film with a thickness of 10 µm was obtained (note that the thickness of the coating film was 40µm in the example 11-1). Note that the coating film was not formed on the glass substrate in the comparative example 5 in Table 7. Following evaluations were carried out on the coating film and a surface of the substrate in each of the examples and the comparative examples obtained in the above method. The results are shown in the following Tables 4 to 9.

### 2-1. Surface tackiness

Tackiness of the coating film was examined by touching the coating film with fingers at room temperature, and the results are evaluated as follows.
A: The coating film is not tacky.
B: The coating film is slightly tacky.
C: The coating film is highly tacky.

### 2-2. Appearance

A surface color of the coating film was visually observed. A transparent and colorless surface is evaluated as A and a colored surface is evaluated as B.

### 2-3. Surface condition

A surface condition of the coating film was visually observed. A uniform surface is evaluated as A and an ununiform surface is evaluated as B.

### 2-4. Adhesiveness to glass

A peeling test using cellophane adhesion tape as specified in JIS K5600 5-6 was carried out on the coating film formed on the glass substrate, and thereby adhesiveness to glass was examined. The results are evaluated as follows.
A: Edges of cut lines are smooth, there is no peeling of the coating film at the intersections of the cut lines, and none of the square sections surrounded by the cut lines is peeled.
B: None of the square sections surrounded by the cut lines is peeled, but the edges of the cut lines are not smooth or there is peeling of the coating film at the intersections of the cut lines.
C: At least one of the square sections surrounded by the cut lines is peeled.

### 2-5. Pencil hardness

A pencil hardness test as specified in JIS K5600 5-4 was carried out on the coating film.

### 2-6. Anti-fogging property

The coating film (a surface of the substrate in the comparative example 5) was placed facing a surface of water having a temperature of 35 °C, 15 cm above the water surface, under a condition at 25 °C and 50 % humidity. While holding the coating film in the above position, an elapsed time since the coating film was placed in the above condition until the surface of the coating film was fogged was measured. The anti-fogging property was evaluated as follows based on the results.
A: The elapsed time is longer than or equal to 60 seconds.
B: The elapsed time is longer than or equal to 30 seconds and shorter than 60 seconds.
C: The elapsed time is longer than or equal to 10 seconds and shorter than 30 seconds.
D: The elapsed time is shorter than 10 seconds.

### 2-7. Water resistance

Appearance defect such as swelling, peeling, and floating of the coating film was observed after leaving the coating film in water with a temperature of 40 °C for 150 hours, and the results are evaluated as follows.
A: No appearance defect is observed.
B: Slight appearance defect is observed.
C: Significant appearance defect is observed.

### 2-8. Durability

After the water resistance test described in the above 2-7, the surface of the coating film was thoroughly dried and then the anti-fogging property test described in the above 2-6 was carried out on the coating film.

### 2-9. Anti-dirt property

The surface of the coating film (the surface of the substrate in the comparative example 5) was pressed with a thumb and a fingerprint was left on the surface of the coating film. Then, the surface of the coating film was wiped in circle ten times using tissue paper (manufactured by NIPPON PAPER CRECIA CO., LTD.). Afterwards, the surface of the coating film was visually observed and the results are evaluated as follows.
A: The fingerprint is not left on the coating film.
B: The fingerprint is slightly left on the coating film.
C: The fingerprint is significantly left on the coating film.

### 2-10. Alkali resistance

Appearance defect such as swelling, peeling, and floating of the coating film was observed after leaving the coating film in a 10 % NaOH solution with a temperature of 40 °C for 30 minutes, and the results are evaluated as follows.
A: No appearance defect is observed.
B: Slight appearance defect is observed.
C: Significant appearance defect is observed.

### 2-11. Acid resistance

Appearance defect such as swelling, peeling, and floating of the coating film was observed after leaving the coating film in a 10 % HCL solution with a temperature of 40 °C for 30 minutes, and the results are evaluated as follows.
A: No appearance defect is observed.
B: Slight appearance defect is observed.
C: Significant appearance defect is observed.

### 2-12. Color difference (light resistance)

Color difference (ΔE*_{ab}) between the glass substrate and a stack of the coating film and the glass substrate was measured. Then, light from a metal halide lamp was irradiated with a condition of 1000 mJ to the coating film. Irradiation of light was carried out 50 times. Afterwards, the color difference was measured again. It can be determined that the smaller the change in the color difference is, the better the light resistance is.

### 2-13. Adhesiveness to PET film

A coating film was formed on a polyethylene terephthalate film, and the peeling test using cellophane adhesion tape as specified in JIS K5600 5-6 was carried out on the coating film provided on the polyethylene terephthalate substrate. Accordingly, adhesiveness to polyethylene terephthalate was examined. The results are evaluated as follows.
A: Edges of cut lines are smooth, there is no peeling of the coating film at the intersections of the cut lines, and none of the square sections surrounded by the cut lines is peeled.
B: None of the square sections surrounded by the cut lines is peeled, but the edges of the cut lines are not smooth or there is peeling of the coating film at the intersections of the cut lines.
C: At least one of the square sections surrounded by the cut lines is peeled.

### 2-14. Dodecane contact angle

Contact angle between the coating film and dodecane was measured by a method as specified in JIS R3257.

### 2-15. Water contact angle

Contact angle between the coating film and water was measured by a method as specified in JIS R3257. As for the examples 33 to 46 and the comparative examples 6 to 7, water contact angle right after a water drop was placed on the coating film (initial value) as well as water contact angles 5 minutes, 10 minutes, 15 minutes, 20 minutes, 25 minutes, and 30 minutes after the water drop was placed on the coating film were measured.

**[Table 4]**

| | | Examples | | | | | | | | | |
|---|---|---|---|---|---|---|---|---|---|---|---|
| | | 1 | 2 | 3 | 4 | 5* | 6 | 7 | 8* | 9 | 10* |
| | Synthetic example 1 | 12.44 | | | | | | | | | |
| | Synthetic example 2 | | 10.89 | | | | | | | | |
| | Synthetic example 3 | | | 11.23 | | | | | | | |
| | Synthetic example 4 | | | | 10.23 | | | | | | |
| | Synthetic example 5 * | | | | | 7.46 | | | | | |
| | Synthetic example 6 | | | | | | 9.33 | | | | |
| | Synthetic example 7 | | | | | | | 18.66 | | | |
| | Synthetic example 8 * | | | | | | | | 37.32 | | |
| | Synthetic example 9 * | | | | | | | | | | |
| | Synthetic example 10 | | | | | | | | | 12.20 | |
| | Synthetic example 11* | | | | | | | | | | 10.66 |
| | Synthetic example 12 | | | | | | | | | | |
| | Synthetic example 13 | | | | | | | | | | |
| Composition (parts by mass) | Synthetic example 14 | | | | | | | | | | |
| | Synthetic example 15 | | | | | | | | | | |
| | Synthetic example 16 * | | | | | | | | | | |
| | Synthetic example 17 * | | | | | | | | | | |
| | Synthetic example 18 * | | | | | | | | | | |
| | Synthetic example 19 * | | | | | | | | | | |
| | Synthetic example 20 * | | | | | | | | | | |
| | Synthetic example 21 * | | | | | | | | | | |
| | 4-methyl hexahydro phthalic anhydride/ hexahydro phthalic anhydride (70/30) | 4.09 | 4.09 | 4.09 | 409 | 4.09 | 409 | 4.09 | 4.09 | 4.09 | 4.09 |
| | malonic acid | | | | | | | | | | |
| | tetrahydrophthalic anhydride | | | | | | | | | | |
| | maleic anhydride | | | | | | | | | | |
| | ethylene diamine | | | | | | | | | | |
| cyclic ether group equivalent! carboxyl group equivalent | | 1 | 1 | 1 | 1 | 1 | 1 | 1 | 1 | 1 | 1 |
| | Surface tackiness | A | A | A | A | A | A | A | A | A | A |
| | Appearance | A | A | A | A | A | A | A | A | A | A |
| | Surface condition | A | A | A | A | A | A | A | A | A | A |
| | Adhesiveness to glass | A | A | A | A | A | A | A | B | A | A |
| | Pencil hardness | 4H | 4H | 4H | 4H | 4H | 4H | 2H | H | 4H | 4H |
| | Anti-fogging property | A | A | A | A | A | A | A | B | A | A |
| | Water resistance | A | A | A | A | A | A | A | A | A | A |
| | Durability | A | A | A | A | A | A | B | B | A | A |
| Evaluation | Anti-dirt property | A | A | A | A | A | A | A | A | A | A |
| | Alkali resistance | A | A | A | A | C | A | A | C | A | A |
| | Acid resistance | A | A | A | A | C | A | A | C | A | A |
| | Color difference ΔE^{*}_{ab} (before light irradiation) | 0.14 | 0.14 | 0.14 | 0.14 | 0.14 | 0.14 | 0.14 | 0.14 | 0.08 | 0.17 |
| | Color difference ΔE^{*}_{ab} (after light irradiation) | 0.82 | 0.82 | 0.82 | 0.82 | 0.82 | 0.82 | 0.82 | 0.82 | 0.84 | 1.08 |
| | Adhesiveness to PET film | A | A | A | A | A | A | A | B | A | A |
| | Water contact angle [°] | 78 | 77 | 72 | 69 | 64 | 71 | 80 | 82 | 84 | 88 |
| | Dodecane contact angle [°] | 33 | 30 | 28 | 31 | 27 | 31 | 25 | 22 | 36 | 40 |

| | | | | | | | | | | | |
|---|---|---|---|---|---|---|---|---|---|---|---|
| * not according to the invention as claimed | | | | | | | | | | | |

**[Table 5]**

| | | Examples | | | | | | | | | |
|---|---|---|---|---|---|---|---|---|---|---|---|
| | | 11-1 | 11-2 | 12 | 13 | 14 * | 15 | 16 | 17 | 18 | 19 |
| | Synthetic example 1 | | | | | 12.44 | 12.44 | 12.44 | 12.44 | 12.44 | |
| | Synthetic example 2 | | | | | | | | | | |
| | Synthetic example 3 | | | | | | | | | | |
| | Synthetic example 4 | | | | | | | | | | |
| | Synthetic example 5* | | | | | | | | | | |
| | Synthetic example 6 | | | | | | | | | | |
| | Synthetic example 7 | | | | | | | | | | |
| | Synthetic example 8 * | | | | | | | | | | |
| | Synthetic example 9 * | | | | | | | | | | |
| | Synthetic example 10 | | | | | | | | | | 12.20 |
| | Synthetic example 11 * | | | | | | | | | | |
| | Synthetic example 12 | 12.14 | 12.14 | | | | | | | | |
| | Synthetic example 13 | | | 14.55 | | | | | | | |
| Composition (parts by mass) | Synthetic example 14 | | | | 14.65 | | | | | | |
| | Synthetic example 15 | | | | | | | | | | |
| | Synthetic example 16 * | | | | | | | | | | |
| | Synthetic example 17 * | | | | | | | | | | |
| | Synthetic example 18 * | | | | | | | | | | |
| | Synthetic example 19 * | | | | | | | | | | |
| | Synthetic example 20 * | | | | | | | | | | |
| | Synthetic example 21 * | | | | | | | | | | |
| | 4-methyl hexahydro phthalic anhydride/ hexahydro phthalic anhydride (70/30) | 4.09 | | 4.09 | 409 | 0.14 | 0.26 | 1.02 | 2.05 | 4.91 | 4.91 |
| | malonic acid | | | | | | | | | | |
| | tetrahy drophthalic | | | | | | | | | | |
| | anhydride | | | | | | | | | | |
| | maleic anhydride | | | | | | | | | | |
| | ethylene diamine | | | | | | | | | | |
| cyclic ether group equivalent/ carboxyl group equivalent | | 1 | | 1 | 1 | 30 | 16 | 4 | 2 | 0.8 | 0.8 |
| | Surface tackiness | A | A | A | A | A | A | A | A | A | A |
| | Appearance | A | A | A | A | A | A | A | A | A | A |
| | Surface condition | A | A | A | A | A | A | A | A | A | A |
| | Adhesiveness to glass | A | C | A | A | B | A | A | A | A | A |
| | Pencil hardness | 4H | 3H | 4H | 3H | H | 2H | 4H | 4H | 4H | 4H |
| | Anti-fogging property | A | A | B | A | B | B | B | B | A | A |
| | Water resistance | A | A | A | A | A | A | A | A | A | A |
| | Durability | A | A | B | A | A | A | A | A | A | A |
| Evaluation | Anti-dirt property | A | A | A | A | A | A | A | A | A | A |
| | Alkali resistance | A | A | A | A | A | A | A | A | A | A |
| | Acid resistance | A | A | A | A | C | A | A | A | A | A |
| | Color difference ΔE*_{ab} (before light irradiation) | 0.08 | 0.08 | 0.21 | 0.21 | 0.14 | 0.14 | 0.14 | 0.14 | 0.14 | 0.08 |
| | Color difference ΔE*_{ab} (after light irradiation) | 0.84 | 0.84 | 1.10 | 1.10 | 0.82 | 0.82 | 0.82 | 0.82 | 0.82 | 0.84 |
| | Adhesiveness to PET film | A | B | A | A | B | A | A | A | A | A |
| | Water contact angle [°] | 79 | 79 | 77 | 73 | 79 | 80 | 80 | 78 | 78 | 83 |
| | Dodecane contact angle [°] | 34 | 34 | 23 | 27 | 16 | 20 | 23 | 25 | 32 | 36 |

| | | | | | | | | | | | |
|---|---|---|---|---|---|---|---|---|---|---|---|
| * not according to the invention as claimed | | | | | | | | | | | |

**[Table 6]**

| | | Examples | | | | | | | | | |
|---|---|---|---|---|---|---|---|---|---|---|---|
| | | 20 * | 21 | 22 | **23** | 24 * | 25* | 26* | 27 | 28* | 29* |
| | Synthetic example 1 | | 12.44 | 12.44 | 12.44 | 12.44 | 12.44 | 12.44 | | | |
| | Synthetic example 2 | | | | | | | | | | |
| | Synthetic example 3 | | | | | | | | | | |
| | Synthetic example 4 | | | | | | | | | | |
| | Synthetic example 5 * | | | | | | | | | | |
| | Synthetic example 6 | | | | | | | | | | |
| | Synthetic example 7 | | | | | | | | | | |
| | Synthetic example 8* | | | | | | | | | | |
| | Synthetic example 9* | | | | | | | | | | |
| | Synthetic example 10 | | | | | | | | | | |
| | Synthetic example 11 * | 10.66 | | | | | | | | | |
| | Synthetic example 12 | | | | | | | | | | |
| | Synthetic example 13 | | | | | | | | | | |
| Composition (parts by mass) | Synthetic example 14 | | | | | | | | | | |
| | Synthetic example 15 | | | | | | | | 15.26 | | |
| | Synthetic example 16* | | | | | | | | | | |
| | Synthetic example 17* | | | | | | | | | 12.14 | |
| | Synthetic example 18* | | | | | | | | | | 12.65 |
| | Synthetic example 19* | | | | | | | | | | |
| | Synthetic example 20* | | | | | | | | | | |
| | Synthetic example 21* | | | | | | | | | | |
| | 4-methyl hexahydro phthalic anhydride/ hexahydro phthalic anhydride (70/30) | 4.91 | 12.27 | 20.46 | 40.92 | | | | 4.09 | 4.09 | 4.09 |
| | malonic acid | | | | | 1.30 | | | | | |
| | tetrahy drophthalic anhydride | | | | | | 1.90 | | | | |
| | maleic anhydride | | | | | | | 1.23 | | | |
| | ethylene diamine | | | | | | | | | | |
| cyclic ether group equivalent! carboxyl group equivalent | | 0.8 | 0.3 | 0.2 | 0.1 | 1 | 1 | 1 | 1 | 1 | 1 |
| | Surface tackiness | A | A | A | A | A | A | A | A | A | A |
| | Appearance | A | A | A | A | A | A | A | A | A | A |
| | Surface condition | A | A | A | A | A | A | A | A | A | A |
| | Adhesiveness to glass | A | A | A | A | A | A | A | A | A | A |
| | Pencil hardness | 4H | 4H | 5H | 6H | 4H | 4H | 3H | 4H | 3H | 2H |
| | Anti-fogging property | A | B | B | B | B | B | B | B | B | B |
| | Water resistance | A | A | A | A | A | A | A | A | A | A |
| | Durability | A | A | B | B | B | | I | | B | |
| Evaluation | Anti-dirt property | A | A | A | A | A | A | A | A | A | A |
| | Alkali resistance | A | A | A | A | A | A | A | A | A | A |
| | Acid resistance | A | A | A | A | A | A | A | A | A | A |
| | Color difference ΔE*_{ab} (before light irradiation) | 0.17 | 0.14 | 0.14 | 0.14 | 0.14 | 0.25 | 0.25 | 0.21 | 0.17 | 0.17 |
| | Color difference ΔE*_{ab} (after light irradiation) | 1.08 | 0.82 | 0.82 | 0.82 | 0.82 | 1.50 | 1.50 | 1.10 | 1.08 | 1.08 |
| | Adhesiveness to PET film | A | A | A | A | A | A | A | A | A | A |
| | Water contact angle [°] | 86 | 78 | 80 | 87 | 78 | 75 | 77 | 76 | 81 | 85 |
| | Dodecane contact angle [°] | 38 | 31 | 31 | 33 | 22 | 20 | 23 | 26 | 19 | 17 |

| | | | | | | | | | | | |
|---|---|---|---|---|---|---|---|---|---|---|---|
| * not according to the invention as claimed | | | | | | | | | | | |

**[Table 7]**

| | | Examples | | | Comparative examples | | | | |
|---|---|---|---|---|---|---|---|---|---|
| | | 30* | 31* | 32* | 1 | 2 | 3 | 4 | 5 |
| Composition (parts by mass) | Synthetic example 1 | | | | | | 12.44 | 12.44 | |
| | Synthetic example 2 | | | | | | | | |
| | Synthetic example 3 | | | | | | | | |
| | Synthetic example 4 | | | | | | | | |
| | Synthetic example 5 * | | | | | | | | |
| | Synthetic example 6 | | | | | | | | |
| | Synthetic example 7 | | | | | | | | |
| | Synthetic example 8 * | | | | | | | | |
| | Synthetic example 9 * | | | | 10.00 | 10.00 | | | |
| | Synthetic example 10 | | | | | | | | |
| | Synthetic example 11 * | | | | | | | | |
| | Synthetic example 12 | | | | | | | | |
| | Synthetic example 13 | | | | | | | | |
| | Synthetic example 14 | | | | | | | | |
| | Synthetic example 15 | | | | | | | | |
| | Synthetic example 16 * | | | 14.64 | | | | | |
| | Synthetic example 17 * | | | | | | | | |
| | Synthetic example 18 * | | | | | | | | |
| | Synthetic example 19* | 12.88 | | | | | | | |
| | Synthetic example 20* | | 18.65 | | | | | | |
| | Synthetic example 21 * | | | | | | | | |
| | 4-methyl hexahydro phthalic anhydride/ hexahydro phthalic anhydride (70/30) | 4.09 | 409 | 4.09 | | 5.00 | | | |
| | malonic acid | | | | | | | | |
| | tetrahydrophthalic anhydride | | | | | | | | |
| | maleic anhydride | | | | | | | | |
| | ethylene diamine | | | | | | | 0.75 | |
| cyclic ether group equivalent! carboxyl group equivalent | | 1 | 1 | 1 | 0 | 0 | - | 1 | - |
| Evaluation | Surface tackiness | A | A | A | A | A | A | A | - |
| | Appearance | A | A | A | A | A | A | B | - |
| | Surface condition | A | A | A | A | B | A | B | - |
| | Adhesiveness to glass | A | A | A | B | B | B | B | - |
| | Pencil hardness | 2H | 2H | 4H | B | B | H | 2H | - |
| | Anti-fogging property | B | B | B | C | C | C | C | D |
| | Water resistance | A | A | A | C | C | C | A | - |
| | Durability | B | B | B | ND | ND | ND | B | - |
| | Anti-dirt property | A | A | A | A | A | A | A | C |
| | Alkali resistance | A | A | A | C | C | C | C | - |
| | Acid resistance | A | A | A | C | C | C | C | - |
| | Color difference ΔE*_{ab} (before light irradiation) | 0.17 | 0.17 | 0.37 | 0.14 | ND | 0.14 | ND | - |
| | Color difference ΔE*_{ab} (after light irradiation) | 1.08 | 1.08 | 3.83 | 0.82 | ND | 0.82 | ND | - |
| | Adhesiveness to PET film | A | A | A | B | B | B | B | - |
| | Water contact angle [°] | 87 | 83 | 72 | 84 | ND | 79 | ND | 58 |
| | Dodecane contact angle [°] | 17 | 16 | 25 | 14 | ND | 16 | ND | 13 |

| | | | | | | | | | |
|---|---|---|---|---|---|---|---|---|---|
| * not according to the invention as claimed | | | | | | | | | |

**[Table 8]**

| | | Examples | | | | | | | | |
|---|---|---|---|---|---|---|---|---|---|---|
| | | 33 | 34 | 35 | 36 | 37 | 38 | 39 | 40 | 41 |
| Composition (parts by mass) | Synthetic example 1 | 0.74 | 0.74 | 0.74 | | | | | | |
| | Synthetic example 9 * | | | | | | | | | |
| | Synthetic example 10 | | | | 0.74 | 0.74 | 0.74 | 0.74 | 0.74 | 0.74 |
| | Synthetic example 11 * | | | | | | | | | |
| | 4-methyl hexahydro phthalic anhydride/ hexahydro phthalic anhydride (70/30) | 0.26 | 0.26 | 0.26 | 0.26 | 0.26 | 0.26 | 0.26 | 0.26 | 0.26 |
| | Fluoro compound 1 | | 0.01 | 0.05 | | 0.01 | 0.05 | | | |
| | Fluoro compound 2 | | | | | | | 0.05 | | |
| | Fluoro compound 3 | | | | | | | | 0.01 | 0.05 |
| | THF [ml] | 3.00 | 3.00 | 300 | 300 | 300 | 300 | 300 | 300 | 300 |
| cyclic ether group equivalent/carboxyl group equivalent | | 1 | 1 | 1 | 1 | 1 | 1 | 1 | 1 | 1 |
| Fluorine oligomer content [wt%] | | 0 | 1 | 5 | 0 | 1 | 5 | 5 | 1 | 5 |
| Evaluation | Surface tackiness | A | A | A | A | A | A | A | A | A |
| | Appearance | A | A | A | A | A | A | A | A | A |
| | Surface condition | A | A | A | A | A | A | A | A | A |
| | Adhesiveness to glass | A | A | A | A | A | A | A | A | A |
| | Pencil hardness | 4H | 4H | 4H | 4H | 4H | 4H | 4H | 4H | 4H |
| | Anti- fogging property | A | A | A | A | A | A | A | A | A |
| | Water resistance | A | A | A | A | A | A | A | A | A |
| | Durability | A | A | A | A | A | A | A | A | A |
| | Anti-dirt property | A | A | A | A | A | A | A | A | A |
| | Alkali resistance | A | A | A | A | A | A | A | A | A |
| | Acid resistance | A | A | A | A | A | A | A | A | A |
| | Dodecane contact angle [°] | 33 | 35 | 39 | 36 | 40 | 49 | 40 | 39 | 51 |
| | Water contact angle [°]: initial value | 78 | 75 | 64 | 84 | 69 | 53 | 81 | 66 | 56 |
| | Water contact angle [°]: 5 minutes later | 68 | 67 | 16 | 79 | 67 | 53 | 77 | 62 | 48 |
| | Water contact angle [°]: 10 minutes later | 63 | 63 | 0 | 79 | 67 | 53 | 77 | 64 | 45 |
| | Water contact angle [°]: 15 minutes later | 56 | 58 | - | 77 | 66 | 53 | 76 | 61 | 43 |
| | Water contact angle [°]: 20 minutes later | 55 | 54 | - | 77 | 66 | 52 | 74 | 59 | 43 |
| | Water contact angle [°]: 25 minutes later | 54 | 53 | - | 77 | 66 | 52 | 73 | 59 | 43 |
| | Water contact angle [°]: 30 minutes later | 54 | 53 | - | 75 | 66 | 52 | 73 | 58 | 42 |

| | | | | | | | | | | |
|---|---|---|---|---|---|---|---|---|---|---|
| * not according to the invention as claimed | | | | | | | | | | |

**[Table 9]**

| | | Examples | | | | | Comparative examples | |
|---|---|---|---|---|---|---|---|---|
| | | 42* | 43* | 44* | 45* | 46* | 6 | 7 |
| Composition (parts by mass) | Synthetic example 1 | | | | | | 10.00 | |
| | Synthetic example 9 * | | | | | | | 10.00 |
| | Synthetic example 10 | | | | | | | |
| | Synthetic example 11 * | 0.74 | 0.74 | 0.74 | 0.74 | 0.74 | | |
| | 4-methylhexahydro phthalic anhydride/ hexahydro phthalic anhydride (70/30) | 0.26 | 0.26 | 0.26 | 0.26 | 0.26 | | |
| | Fluoro compound 1 | | 0.01 | 0.05 | | | | |
| | Fluoro compound 2 | | | | 0.05 | | | |
| | Fluoro compound 3 | | | | | 0.05 | | |
| | THF [ml] | 3.00 | 3.00 | 300 | 300 | 300 | | |
| cyclic ether group equivalent/carboxyl group equivalent | | 1 | 1 | 1 | 1 | 1 | | |
| Fluorine oligomer content [wt%] | | 0 | 1 | 5 | 5 | 5 | 0 | 0 |
| Evaluation | Surface tackiness | A | A | A | A | A | A | A |
| | Appearance | A | A | A | A | A | A | A |
| | Surface condition | A | A | A | A | A | A | A |
| | Adhesiveness to glass | A | A | A | A | A | B | B |
| | Pencil hardness | 4H | 4H | 4H | 4H | 4H | H | B |
| | Anti- fogging property | A | A | A | A | A | C | C |
| | Water resistance | A | A | A | A | A | C | C |
| | Durability | A | A | A | A | A | ND | ND |
| | Anti-dirt property | A | A | A | A | A | A | A |
| | Alkali resistance | A | A | A | A | A | C | C |
| | Acid resistance | A | A | A | A | A | C | C |
| | Dodecane contact angle [°] | 40 | 43 | 52 | 44 | 56 | 16 | 14 |
| | Water contact angle [°]: initial value | 88 | 57 | 33 | 63 | 45 | 79 | 84 |
| | Water contact angle [°]: 5 minutes later | 84 | 56 | 33 | 61 | 41 | 76 | 83 |
| | Water contact angle [°]: 10 minutes later | 83 | 56 | 33 | 61 | 40 | 73 | 82 |
| | Water contact angle [°]: 15 minutes later | 83 | 55 | 33 | 61 | 38 | 71 | 80 |
| | Water contact angle [°]: 20 minutes later | 80 | 55 | 32 | 60 | 39 | 60 | 78 |
| | Water contact angle [°]: 25 minutes later | 78 | 55 | 32 | 61 | 37 | 56 | 78 |
| | Water contact angle [°]: 30 minutes later | 78 | 55 | 32 | 59 | 34 | 56 | 78 |

| | | | | | | | | |
|---|---|---|---|---|---|---|---|---|
| * not according to the invention as claimed | | | | | | | | |

As is obvious from the above explained embodiments, the coating resin composition according to the first embodiment is the coating resin composition for forming the coating film according to claim 1.

The coating film having the anti-fogging property and the anti-dirt property can be formed by using the coating resin composition.

In the coating resin composition of the present invention, the polymerizable monomer component (a) contains only the monomer (a21) containing 11 or less carbon atoms. In this case, the coating film can have the especially good anti-fogging property.

In the coating resin composition according to the present invention the amount of the ethylene-based unsaturated monomer (a11) is larger than or equal to 40 parts by mass and less than or equal to 100 parts by mass, with respect to 100 parts by mass of the polymerizable monomer component (a). In this case, the coating film can have the good adhesiveness with the inorganic oxide.

In the coating resin composition according to the present invention, the weight average molecular weight of the cyclic ether group-containing polymer (A) may be larger than equal to 1000 and smaller than or equal to 13000. In this case, the coating film can have the especially good properties.

In the coating resin composition according to the present invention the amount of the cyclic ether groups in the cyclic ether group-containing polymer (A) is larger than or equal to 0.1 equivalents and less than or equal to 16 equivalents, with respect to 1 equivalent of the carboxyl groups in the component (B). In this case, the coating film can have the especially high hydrophilicity, and at the same time the adhesiveness, the water resistance, the hardness, and the chemical resistance of the coating film are well maintained.

In the coating resin composition according to the present invention the cyclic ether group-containing polymer (A) may have an epoxy group.

In the coating resin composition according to the present invention, in some embodiments the cyclic ether group-containing polymer (A) does not have an aromatic ring. In this case, the coating film can have the high transparency.

In the coating resin composition according to the present invention, in some embodiments the component (B) may be liquid at 25 °C. In this case, the coating film can have the high homogeneity and the high hydrophilicity.

In the coating resin composition according to the present invention, the component (B) may contain at least one of 4-methylhexahydrophthalic anhydride and hexahydrophthalic anhydride. In this case, the coating film can have the high homogeneity and the high hydrophilicity.

In the coating resin composition according to the present invention the coating resin composition need not contain a curing catalyst. Even though the coating resin composition does not contain the curing catalyst, the reaction between the cyclic ether group-containing polymer (A) and the component (B) in the coating resin composition can proceed well.

The coating resin composition according to the present invention may contain at least one of the compound represented by the formula (1) and the compound represented by the formula (2). The compound represented by the formula (1) and the compound represented by the formula (2) can improve the hydrophilicity and the oleophobicity of the coating film.

In claim 9 the coating resin composition is used for forming the coating film having the anti-fogging property and the anti-dirt property.

## Claims

1. A coating resin composition for forming a coating film, comprising:
a cyclic ether group-containing polymer (A) which is a polymer of a polymerizable monomer component (a) containing an ethylene-based unsaturated monomer (a11) having a cyclic ether group and an ethylene-based unsaturated monomer (a12) not having a cyclic ether group, wherein the polymerizable monomer component (a) contains only monomers containing 11 or less carbon atoms; and
a component (B) consisting of at least one compound selected from a group consisting of a polycarboxylic acid (b 1) and a polycarboxylic acid anhydride (b2), wherein
in a case where the component (B) contains the polycarboxylic acid (b1), the polycarboxylic acid (b1) contains at least one of 4-methylhexahydrophthalic acid and hexahydrophthalic acid,
in a case where the component (B) contains the polycarboxylic acid anhydride (b2), the polycarboxylic acid anhydride (b2) contains at least one of 4-methylhexahydrophthalic anhydride and hexahydrophthalic anhydride,
an amount of the cyclic ether groups in the cyclic ether group-containing polymer (A) is larger than or equal to 0.1 equivalents and less than or equal to 16 equivalents, with respect to 1 equivalent of the carboxyl groups in the component (B),
a cured product of the coating resin composition which is cured by being heated for 0.1 hour or more at a temperature higher than or equal to 100 °C and lower than or equal to a decomposition temperature of the coating resin composition has a water contact angle of 90° or less under a measurement specified by JIS R3257,
the monomer (a12) is selected from the group consisting of tert-butyl acrylate and tert-butyl methacrylate, and
an amount of the ethylene-based unsaturated monomer (a11) is larger than or equal to 40 parts by mass and less than 100 parts by mass, with respect to 100 parts by mass of the polymerizable monomer component (a).

2. The coating resin composition according to claim 1, wherein
a weight average molecular weight of the cyclic ether group-containing polymer (A), measured as described in the description, is larger than or equal to 1000 and smaller than or equal to 13000.

3. The coating resin composition according to claim 1 or 2, wherein
the cyclic ether group-containing polymer (A) has an epoxy group.

4. The coating resin composition according to any one of claims 1 to 3, wherein
the cyclic ether group-containing polymer (A) does not have an aromatic ring.

5. The coating resin composition according to any one of claims 1 to 4, wherein
the component (B) is liquid at 25 °C.

6. The coating resin composition according to any one of claims 1 to 5, wherein
the component (B) contains at least one of 4-methylhexahydrophthalic anhydride and hexahydrophthalic anhydride.

7. The coating resin composition according to any one of claims 1 to 6, wherein
the coating resin composition does not contain a curing catalyst.

8. The coating resin composition according to any one of claims 1 to 7, further comprising at least one of a compound represented by a following formula (1) and a compound represented by a following formula (2), wherein
in the formula (1), R_{F} represents CₐF₂ₐ₊₁O_{b}, a represents a number larger than or equal to 1 and smaller than or equal to 15, b represent a number larger than or equal to 0 and smaller than or equal to 10, R represents an organic group, and n represents a natural number, and
in the formula (2), R_{F} represents CₐF₂ₐ₊₁, a represents a number larger than or equal to 1 and smaller than or equal to 15, x and y represent natural numbers such that x : y is within a range of 1 : 99 to 60 : 40.
R_{F}-(CH₂CH(C(=O)R))ₙ-R_{F} . . . (1)

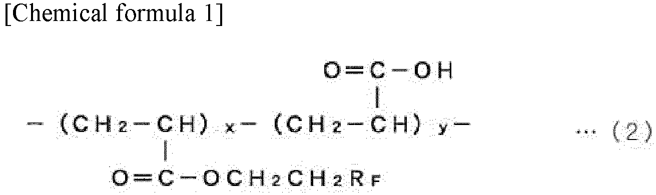

9. Use of the coating resin composition according to any one of claims 1 to 8 for forming a coating film having an anti-fogging property and an anti-dirt property.

## Patentansprüche

1. Beschichtungsharzzusammensetzung zur Bildung eines Beschichtungsfilms, umfassend:
ein cyclische Ethergruppen enthaltendes Polymer (A), das ein Polymer einer polymerisierbaren Monomerkomponente (a) ist, die ein ethylenisch ungesättigtes Monomer (a11) mit einer cyclischen Ethergruppe und ein ethylenisch ungesättigtes Monomer (a12), das keine cyclische Ethergruppe aufweist, enthält, wobei die polymerisierbare Monomerkomponente (a) nur Monomere enthält, die 11 oder weniger Kohlenstoffatome enthalten; und
eine Komponente (B), die aus wenigstens einer Verbindung besteht, welche aus der Gruppe ausgewählt ist, die aus einer Polycarbonsäure (b1) und einem Polycarbonsäureanhydrid (b2) besteht, wobei
in dem Fall, dass die Komponente (B) die Polycarbonsäure (b1) enthält, die Polycarbonsäure (b1) 4-Methylhexahydrophthalsäure und/oder Hexahydrophthalsäure enthält,
und in dem Fall, dass die Komponente (B) das Polycarbonsäureanhydrid (b2) enthält, das Polycarbonsäureanhydrid (b2) 4-Methylhexahydrophthalsäureanhydrid und/oder Hexahydrophthalsäureanhydrid enthält,
die Menge der cyclischen Ethergruppen in dem cyclische Ethergruppen enthaltenden Polymer (A) größer oder gleich 0,1 Äquivalente und kleiner oder gleich 16 Äquivalente ist, bezogen auf 1 Äquivalent der Carboxygruppen in der Komponente (B),
ein gehärtetes Produkt der Beschichtungsharzzusammensetzung, das dadurch gehärtet wird, dass es 0,1 Stunden lang oder länger bei einer Temperatur von größer oder gleich 100°C und kleiner oder gleich einer Zersetzungstemperatur der Beschichtungsharzzusammensetzung erhitzt wird, bei einer durch JIS R3257 spezifizierten Messung einen Wasserkontaktwinkel von 90° oder weniger aufweist,
das Monomer (a12) aus der Gruppe ausgewählt ist, die aus tert-Butylacrylat und tert-Butylmethacrylat besteht, und
die Menge des ethylenisch ungesättigten Monomers (a11) größer oder gleich 40 Massenteile und kleiner oder gleich 100 Massenteile ist, bezogen auf 100 Massenteile der polymerisierbaren Monomerkomponente (a).

2. Beschichtungsharzzusammensetzung gemäß Anspruch 1, wobei
das Gewichtsmittel des Molekulargewichts des cyclische Ethergruppen enthaltenden Polymers (A), das so gemessen wird, wie es in der Beschreibung beschrieben ist, größer oder gleich 1000 und kleiner oder gleich 13000 ist.

3. Beschichtungsharzzusammensetzung gemäß Anspruch 1 oder 2, wobei
das cyclische Ethergruppen enthaltende Polymer (A) eine Epoxidgruppe aufweist.

4. Beschichtungsharzzusammensetzung gemäß einem der Ansprüche 1 bis 3, wobei
das cyclische Ethergruppen enthaltende Polymer (A) keinen aromatischen Ring aufweist.

5. Beschichtungsharzzusammensetzung gemäß einem der Ansprüche 1 bis 4, wobei
die Komponente (B) bei 25°C flüssig ist.

6. Beschichtungsharzzusammensetzung gemäß einem der Ansprüche 1 bis 5, wobei
die Komponente (B) wenigstens eines von 4-Methylhexahydrophthalsäureanhydrid und Hexahydrophthalsäureanhydrid enthält.

7. Beschichtungsharzzusammensetzung gemäß einem der Ansprüche 1 bis 6, wobei
die Beschichtungsharzzusammensetzung keinen Härtungskatalysator aufweist.

8. Beschichtungsharzzusammensetzung gemäß einem der Ansprüche 1 bis 7, weiterhin umfassend
wenigstens eine durch die folgende Formel (1) dargestellte Verbindung und eine durch die folgende Formel (2) dargestellte Verbindung, wobei
in der Formel (1) R_{F} für CₐF₂ₐ₊₁O_{b} steht, a für eine Zahl größer oder gleich 1 und kleiner oder gleich 15 steht, b für eine Zahl größer oder gleich 0 und kleiner oder gleich 10 steht, R für eine organische Gruppe steht und n für eine natürliche Zahl steht und
in der Formel (2) R_{F} für CₐF₂ₐ₊₁ steht, a für eine Zahl größer oder gleich 1 und kleiner oder gleich 15 steht, x und y so für natürliche Zahlen stehen, dass x : y im Bereich von 1 : 99 bis 60 : 40 liegt:
R_{F}-(CH₂CH(C(=O)R))ₙ-R_{F} ··· (1)

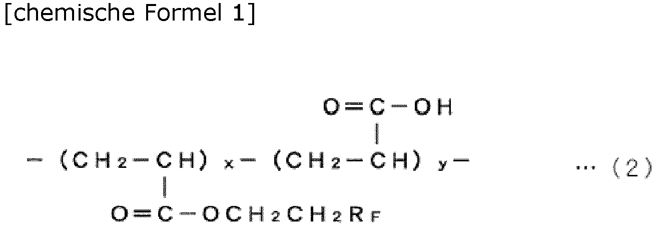

9. Verwendung der Beschichtungsharzzusammensetzung gemäß einem der Ansprüche 1 bis 8 zur Bildung eines Beschichtungsfilms mit einer Antibeschlageigenschaft und einer schmutzabweisenden Eigenschaft.

## Revendications

1. Composition de résine de revêtement destinée à former un film de revêtement, comprenant :
un polymère contenant un groupe éther cyclique (A) qui est un polymère d'un composant monomère polymérisable (a) contenant un monomère insaturé à base d'éthylène (a11) présentant un groupe éther cyclique et un monomère insaturé à base d'éthylène (a12) ne présentant pas de groupe éther cyclique,
où le composant monomère polymérisable (a) ne contient que des monomères contenant 11 atomes de carbone ou moins ; et
un composant (B) constitué d'au moins un composé choisi dans un groupe constitué d'un acide polycarboxylique (b1) et d'un anhydride d'acide polycarboxylique (b2), où
dans un cas dans lequel le composant (B) contient l'acide polycarboxylique (b1), l'acide polycarboxylique (b1) contient au moins un élément parmi l'acide 4-méthylhexahydrophtalique et l'acide hexahydrophtalique,
dans un cas dans lequel le composant (B) contient l'anhydride d'acide polycarboxylique (b2), l'anhydride d'acide polycarboxylique (b2) contient au moins un élément parmi l'anhydride 4-méthylhexahydrophtalique et l'anhydride hexahydrophtalique,
une quantité des groupes éther cyclique dans le polymère contenant des groupes éther cyclique (A) est supérieure ou égale à 0,1 équivalent et inférieure ou égale à 16 équivalents, par rapport à 1 équivalent des groupes carboxyle dans le composant (B),
un produit durci de la composition de résine de revêtement qui est durci par chauffage pendant 0,1 heure ou plus à une température supérieure ou égale à 100 °C et inférieure ou égale à une température de décomposition de la composition de résine de revêtement présente un angle de contact avec l'eau de 90° ou moins sous une mesure spécifiée par JIS R3257,
le monomère (a12) est choisi dans le groupe constitué de l'acrylate de tert-butyle et du méthacrylate de tert-butyle, et
une quantité du monomère insaturé à base d'éthylène (a11) est supérieure ou égale à 40 parties en masse et inférieure à 100 parties en masse, par rapport à 100 parties en masse du composant monomère polymérisable (a).

2. Composition de résine de revêtement selon la revendication 1, dans laquelle un poids moléculaire moyen en poids du polymère contenant un groupe éther cyclique (A), mesuré comme décrit dans la description, est supérieur ou égal à 1 000 et inférieur ou égal à 13 000.

3. Composition de résine de revêtement selon la revendication 1 ou 2, dans laquelle le polymère contenant un groupe éther cyclique (A) présente un groupe époxy.

4. Composition de résine de revêtement selon l'une quelconque des revendications 1 à 3, dans laquelle le polymère contenant un groupe éther cyclique (A) ne présente pas de cycle aromatique.

5. Composition de résine de revêtement selon l'une quelconque des revendications 1 à 4, dans laquelle le composant (B) est liquide à 25°C.

6. Composition de résines de revêtement selon l'une quelconque des revendications 1 à 5, dans laquelle le composant (B) contient au moins un élément parmi l'anhydride 4-méthylhexahydrophtalique et l'anhydride hexahydrophtalique.

7. Composition de résine de revêtement selon l'une quelconque des revendications 1 à 6, dans laquelle la composition de résine de revêtement ne contient pas de catalyseur de durcissement.

8. Composition de résine de revêtement selon l'une quelconque des revendications 1 à 7, comprenant en outre au moins un composé parmi un composé représenté par la formule (1) suivante et un composé représenté par la formule (2) suivante, où
dans la formule (1), R_{F} représente CₐF₂ₐ₊₁O_{b}, a représente un nombre supérieur ou égal à 1 et inférieur ou égal à 15, b représente un nombre supérieur ou égal à 0 et inférieur ou égal à 10, R représente un groupe organique, et n représente un entier naturel, et
dans la formule (2), R_{F} représente CₐF₂ₐ₊₁, a représente un nombre supérieur ou égal à 1 et inférieur ou égal à 15, x et y représentent des entiers naturels tels que x:y se situe dans une plage de 1:99 à 60:40.
R_{F}-(CH₂CH(C(=O)R))ₙ-R_{F} ··· (1)

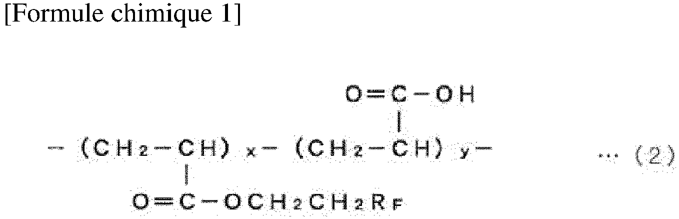

9. Utilisation de la composition de résine de revêtement selon l'une quelconque des revendications 1 à 8 pour former un film de revêtement présentant une propriété antibuée et une propriété antisalissure.
